# EUROPEAN PATENT SPECIFICATION

(11) **EP 1 597 170 B1**
(45) Date of publication and mention of the grant of the patent: **07.10.2009**
(21) Application number: 03781995.0
(22) Date of filing: 02.12.2003
(51) Int. Cl.: B65D 83/06, B65G 65/40, G01F 11/00

(54) **METHOD AND APPARATUS FOR DISPENSING OF PARTICULATE MATERIAL**
VERFAHREN UND VORRICHTUNG ZUR AUSGABE VON PARTIKELFÖRMIGEM MATERIAL
PROCEDE ET APPAREIL DE DISTRIBUTION D'UN MATERIAU PARTICULAIRE

(30) Priority: 04.12.2002 AU 2002953139; 22.10.2003 AU 2003905790
(43) Date of publication of application: 23.11.2005
(73) Proprietor: T.A.C.A. International Pty Ltd, Mont Albert, Victoria 3127 (AU)
(72) Inventor: BELL, Paul, William, Golden Square, VIC 3555 (AU); VAN ZWOL, Geoffrey, Golden Square, VIC 3555 (AU)
(74) Representative: Jackson, Martin Peter
(86) International application number: PCT/AU2003/001610
(87) International publication number: WO 2004/050509

(56) References cited:
- EP-B1- 0 752 203
- EP-B1- 0 763 316
- AU-B2- 753 910

## Description

The present invention relates to a method and apparatus for the dispensing of a measured amount of welding material from a hopper or the like container housing a supply of such material.

More particularly the invention relates to an improved method and apparatus for the dispensing of particulate tungsten carbide for welding purposes.

This application is for improvements to that disclosed in Australian Patent No. 753910 (61378/00) in the name T.A.C.A. Australia Pty Ltd. The several elements of that patent are designed to produce a metered dispensation of a particulate material, in particular tungsten carbide.

The present application is concerned with improvements in various aspects of the original patent to effect:
1. improved metered dispensation;
2. improved welding resulting from particular application of metered welding material; and
3. more flexible geometrical application of welding material resulting from simplification of the original apparatus.

Accordingly this invention provides an apparatus for the metered dispensation of a particulate welding material, said apparatus comprising:
(a) a first hopper having a first inlet means and first outlet means having a centrally disposed open tube;
(b) a second hopper in flow connection with the first hopper and having a second inlet means and a second outlet means;
(c) a take-off means in combination with the second hopper and adapted to remove a proportion of the particulate material from a flow of the material through the second hopper; and
(d) recycling means adapted to return the proportionate flow of the particulate material to the first hopper,
characterised in that:
a restrictor means is inserted in the first outlet means to restrict the flow of particulate material by altering the Venturi effect in the region of the centrally disposed open tube.

The restrictor means preferably comprises one or more of a range of collets which is/are inserted into the bottom of the conical discharge chute leading from the first hopper to alter the Venturi effect controlling the rate of exit of the particulate material from the first hopper. The size of the collet allows a particular, desired size of particulate material to be passed. Thus, if the Venturi portion is too wide then, depending on the size of the particulate material, the Venturi can be flooded. If it is too narrow, no or too little particulate material is passed. It is generally desired that the particulate material should act in a fluid manner as it is passed through the Venturi tube. Where there is a recycling means, preferably a deflector means is inserted into a preliminary hopper in flow connection with the first hopper to ensure that a relatively high proportion of medium to large size particulate material is passed to the first hopper.

More preferably a screening filter is attached to an out-take from the preliminary hopper to ensure that only fine dust is extracted from the system.

Preferably a welding injection tube connected to the outlet from the second hopper is located at an optimum angle to the horizontal whereby:
(a) the particulate welding material drops behind the flash area caused by ignition of a welding wire; and
(b) the particulate welding material does not drop so far from the flash area that a weld pool is not formed.

In a second aspect, the present invention provides an improved method for the metered dispensation of a particulate welding material using the apparatus of any one of claims 1 and 6, which method comprises the steps of:
(a) establishing the primary flow of the material through the first hopper and the second hopper in series;
(b) extracting from the primary flow through the second hopper a determined secondary flow of the material by the take-off means; and
(c) recycling the secondary flow to the primary flow in such a manner that a metered dispensation of the material is obtained,
   wherein the improvement comprises using the restrictor means to adjust the primary flow to obtain the proportionate flow through the first hopper in such a manner that a desired size range of particulate material is delivered. Preferably the adjustment of primary flow is achieved by restricting to a predetermined extent the flow of particulate material from the first hopper. More preferably the recycled flow of particulate welding material is passed to a preliminary hopper in flow connection with the first hopper wherein fine material is passed upwardly to a collection chamber and coarse material is passed downwardly to the first hopper.

In another aspect of the present invention, the determined secondary flow is passed in part to a reservoir for the particulate welding material from which reservoir the particulate welding material may be recycled at selected intervals into the first hopper.

This invention is particularly suitable for the use of tungsten carbide chips for hard facing parts made of steel.

In order that the invention may be more clearly understood and put into practical effect reference will now be made to preferred embodiments of a method and apparatus in accordance with the present invention.

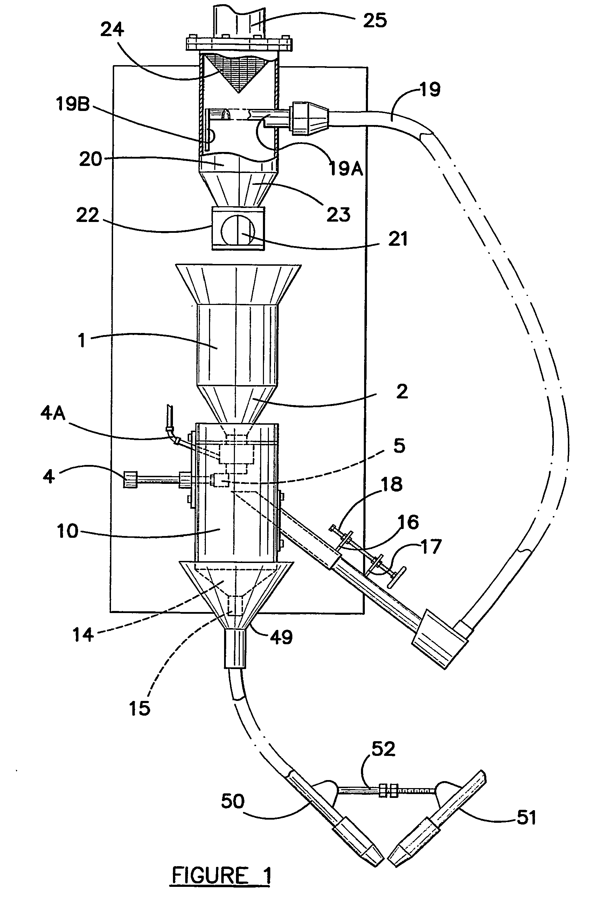

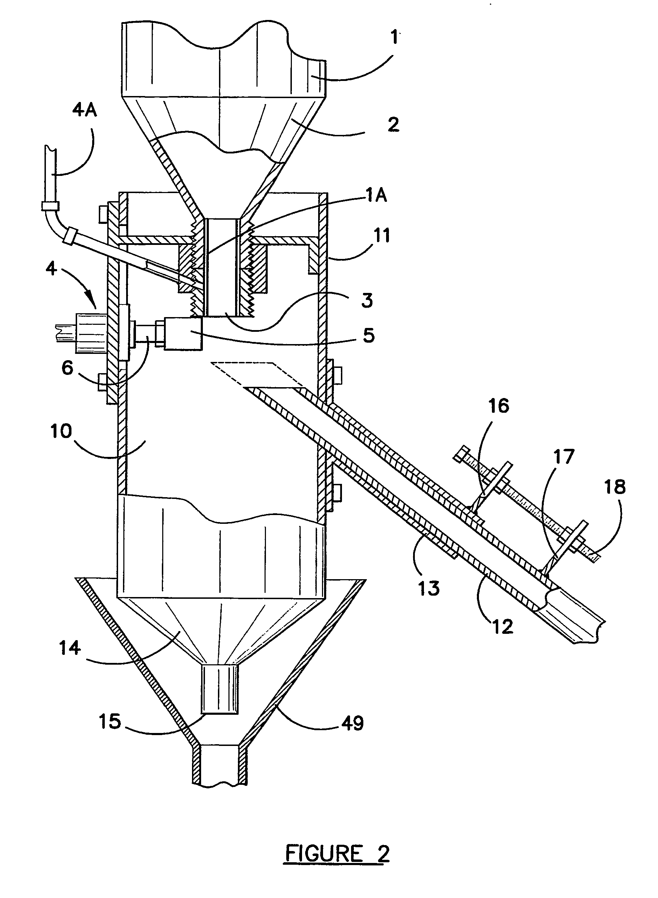

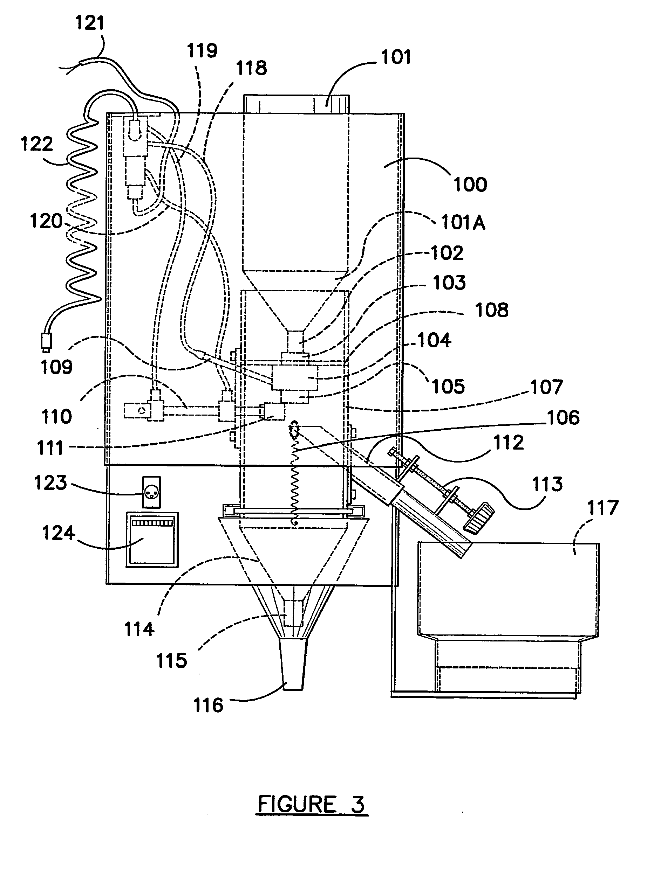

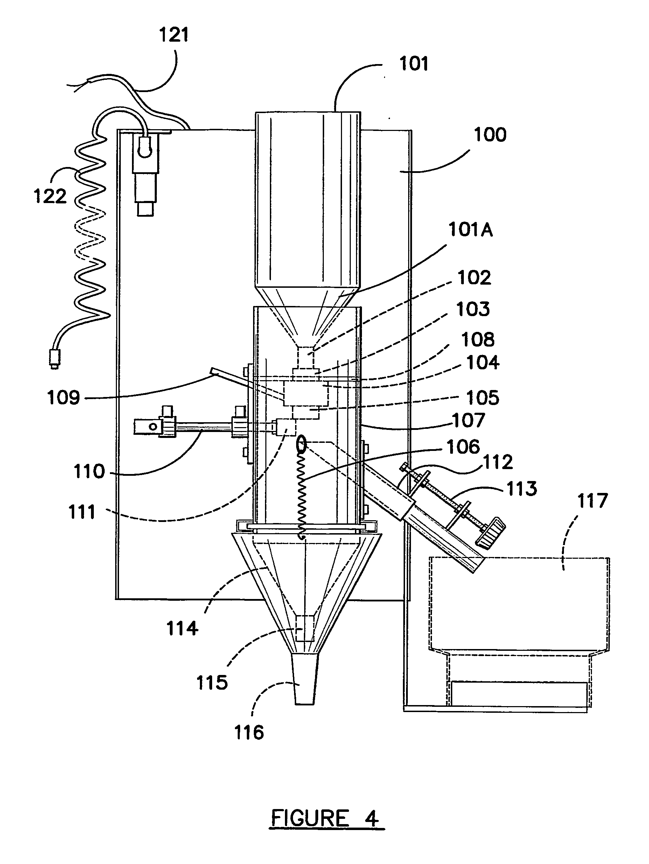

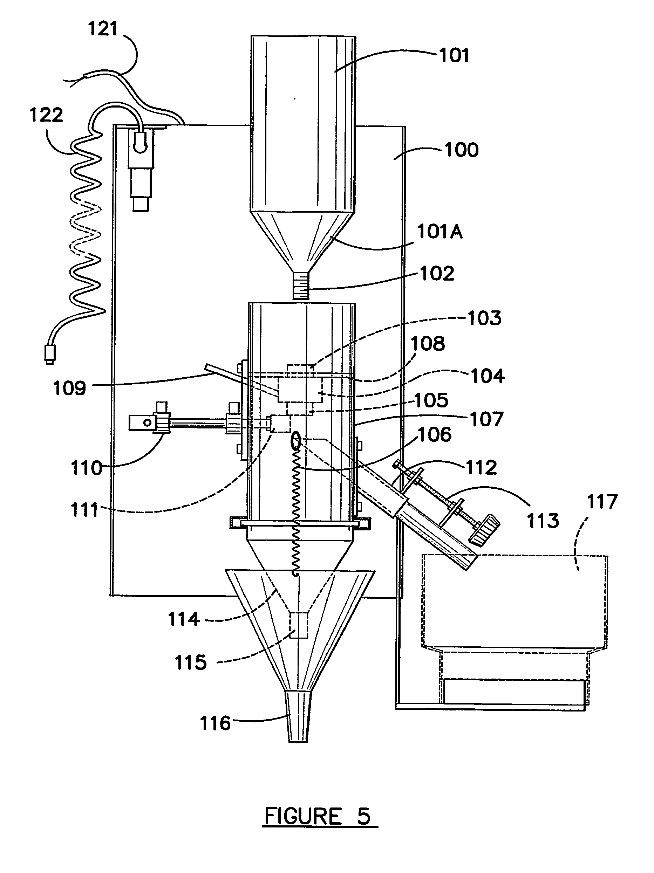

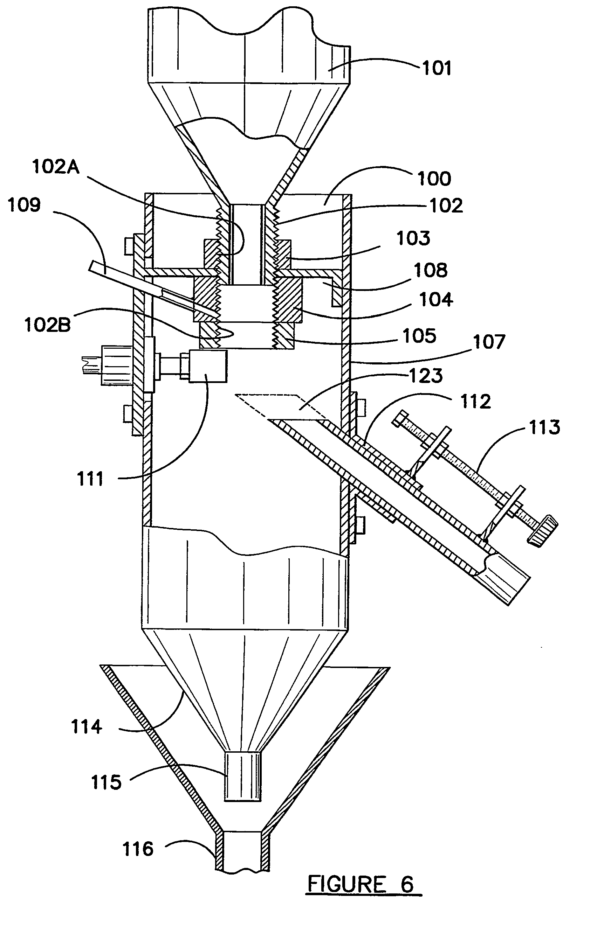

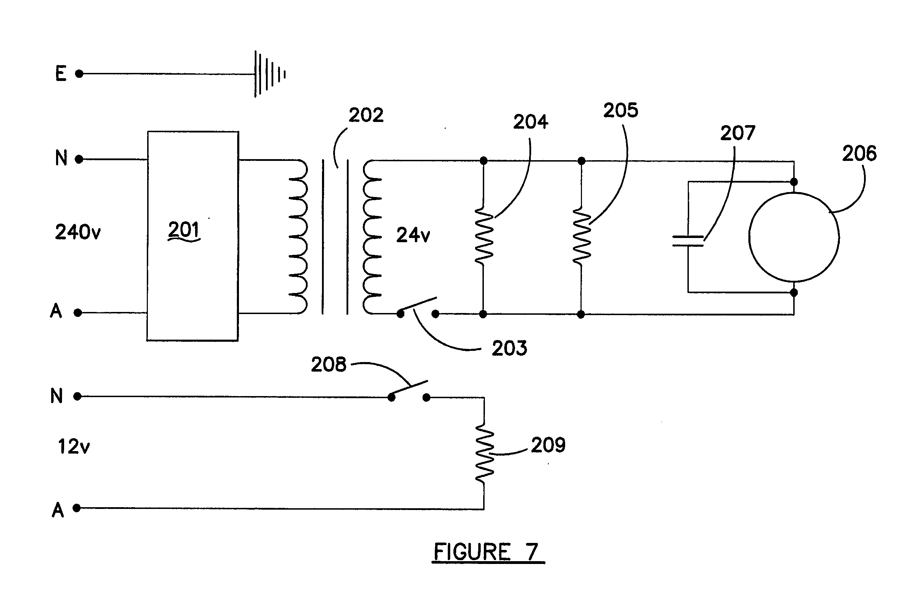

The ensuing description is given by way of non-limitative example only with reference to the accompanying drawings, in which: Fig. 1 is a side elevational and schematic view, partly in cross-section, of an embodiment of the apparatus in accordance with the present invention; Fig. 2. is a cross sectional view of part of the apparatus of Fig.1; Figs. 3 to 5 are side elevational and schematic views, partly in cross-section, of an apparatus in accordance with another aspect of the invention ; Fig. 6 is a cross-sectional view of part of the apparatus of Figs. 3 to 5 ; and Fig. 7 shows an electrical circuit for use in the apparatus of the invention.

With particular regard to Figs. 1 and 2, there is illustrated a first hopper 1 for housing a replenishable supply of a welding material in particulate form.

An initial charge of particulate material of generally selected size is added through the top of first hopper 1.

Preferably first hopper 1 is substantially funnel-shaped having a conical discharge chute 2 at its lower end. Numeral 3 relates to a centrally disposed open tube at the bottom of chute 2.

Any suitable means may be employed to control the overall flow of particulate material out of first hopper 1 into second hopper 10. For example, a gate means 4 comprising a piston 6 and a closure means 5 may be used, closure means 5 being moved into and out of co-operation with centrally disposed open tube 3.

Item 4A refers to means for cleaning open tube 3 by the use of a jet of compressed gas, such as compressed air.

Numeral 1A refers to a collet or collets insertable into centrally disposed open tube 3 to further control flow of the particulate material. By this means the Venturi effect in the region of centrally disposed open tube 3 may be altered as desired with a consequent effect on the flow of particulate material. Second hopper 10 is disposed immediately below first hopper 1 and is adapted to retain for a time particulate material exiting from first hopper 1. Means to extract (or "take-off" means) a proportion of the flow of particulate material is provided in co-operation with second hopper 10. This proportionate flow is recycled to preliminary hopper 20. This means to extract is exemplified in Fig.2. by an elongate hollow member 12 slidable in a fixed sleeve 13 which penetrates side wall 11 of second hopper 20. Elongate hollow member 12 is shaped to penetrate the flow of particulate material emerging from centrally disposed open tube 3.

In the embodiment shown, elongate hollow member 12 is advanced or retracted using arm members 16 and 17 attached to sleeve 13 and elongate hollow member 12 respectively. Movement of elongate hollow member 12 may be obtained using a screw member 18 penetrating arm members 17 and 18 respectively.

Other means to extract a proportion of the flow of particulate material are described in patent no. 753 910; see chamber 30 in Fig.3. and chamber 40 in Fig.4. in that patent.

A proportion of particulate material is recycled to preliminary hopper 20 by means of return by-pass hose 19. A semi-circular deflector tube 19A, preferably made of tungsten or a tungsten alloy, is fitted to the end of by-pass hose 19, internally of preliminary hopper 20. This deflector tube 19A ends in a deflector plate 19B at a right angle to the axis of the tube.

A vacuum shut-off ball 21 is fitted within cage 22 at the bottom of return storage cone 23. A screening filter 24 is fitted to the upper outlet of preliminary hopper 20 to capture all but very fine dust.

When vacuum is applied through connecting pipe 25, ball 21 rises in cage 22 shutting off the feed of particulate material to first hopper 1, and also resulting in particulate material being dragged through hose 19 to deflector tube 19A. When this operation is complete the vacuum is shut off and hopper 1 refills with larger sized material.

Turning now to the particulate material flowing through conical discharge chute 14, 15 at the bottom of second hopper 10 and into funnel 49, this material flows to injection tube 50 whereby the particulate material may be injected into a weld pool. A second injection tube 51 carries a wire feed for a MIG torch. Injection tube 51 also carries argon gas to bathe the weld pool. An adjustable tie means 52 is also shown whereby the relative angles of attack of injection tubes 50 and 51 may be altered as well as their relative distances from the weld pool.

Turning to the other aspect of the invention, this is illustrated in Figs.3 to 6. In Fig.3, numeral 100 indicates a back plate to which the operative part of the invention is attached. Item 101 is a first hopper which terminates in conical discharge chute 101A and tube 102. Numeral 103 indicates a spacing nut, numeral 104 a nut and numeral 105 a second opposing spacing nut.

Item 106 is a spring. Numeral 107.indicates a second hopper and numeral 108 a transverse, circular, interior plate within the hopper 107. Item 109 is means for cleaning an aperture through spacing nut 104 and spacing nut 105. Numeral 110 indicates a piston supplied with closure means 111 for opening and closing the aperture through spacing nut 105 by means of compressed air. Item 112 indicates an elongated hollow member which can be advanced or retracted using threaded arm mechanism 113, as previously described. Item 114 is a conical discharge chute, item 115 a discharge tube and item 116 a funnel. Numeral 117 indicates a reservoir for particulate material.

Item 118 is a tube for compressed air leading to means for cleaning 109. Item 119 and item 120 are a pair of tubes for compressed air for operating piston 110. Numeral 121 indicates an electrical lead for operating a switch to in turn operate a feed of compressed to pair of tubes 119 and 120. Item 122 indicates a supply tube for compressed air. Item 123 is an electrical inlet and item 124 is a time meter.

Fig.4 is essentially the same as Fig.3., the differences being that only hidden parts are shown with dotted lines and connecting tubes for compressed air are omitted.

Fig.5. is essentially the same as Figs.3 and 4, the difference being that the springs (one only is shown) are elongated to allow cleaning of conical discharge chute 114 and funnel 116.

Fig.6. shows the lower portion of first hopper 101 connected to second hopper 107 suspended above funnel 116. First hopper 101 terminates in a tube 102 which is provided with an exterior thread 102A which co-operates with internal thread 102B on spacing nut 103, nut 104 and spacing nut 105. Elongated hollow member 112 is shown in partial cross-section.

Fig.7. shows an electrical circuit for operating various facets of the invention and determining how long the apparatus has been in use.

In the circuit 240 volts is supplied to a power filter 201 and then to a transformer 202 where it emerges as 24 volts. A relay switch 203 is supplied in the circuit.

A timing motor 204 is inserted in parallel to measure how long the circuit has been in use and hence how long welding has taken.

An air solenoid coil 205 is inserted in parallel in the circuit to operate the closure means between the first hopper and the second hopper.

Thus air solenoid coil 205 operates a mechanical switch (not shown) which in turn operates the closure means between the first hopper and the second hopper.

Further to the first aspect of this invention, power is supplied to a vacuum motor 206 which is connected to the preliminary hopper to remove particulate fines. A capacitor 207 of approximately 10 microfarads is connected around the vacuum motor 206 to stop arcing by bleeding back voltage. It also suppresses noise.

The circuit means further comprises a sub-circuit which supplies 12 volts to a foot switch 108 and a relay coil 209. The object of this sub-circuit is to allow switch 203 to be opened and closed by the use of a safe voltage. Conveniently switch 208 is foot-operated.

In use the variant of the present invention which uses a preliminary hopper to assist recycling may be awkward to use in cases where there is limited space or the weld is to be placed vertically. The simpler variant may well be desirable in such situations.

The operation of the apparatus according to the invention has been described largely by reference to manual control.

## Claims

1. An apparatus for the metered dispensation of a particulate welding material, said apparatus comprising:
(a) a first hopper (1) having a first inlet means and first outlet means (2,3) having a centrally disposed open tube (3);
(b) a second hopper (10) in flow connection with the first hopper and having a second inlet means and a second outlet means (14,15);
(c) a take-off means (12,13) in combination with the second hopper and adapted to remove a proportion of the particulate material from a flow of the material through the second hopper; and
(d) recycling means (19) adapted to return the proportionate flow of the particulate material to the first hopper,
**characterised in that**:
a restrictor means (1A) is inserted in the first outlet means (2, 3) to restrict the flow of particulate material by altering the Venturi effect in the region of the centrally disposed open tube.

2. An apparatus is claimed in claim 1, wherein the first hopper terminates in a conical discharge chute (2,3) and the restrictor means comprises one or more of a range of collets (1A) which is/are inserted into the bottom of the conical discharge chute (3) to alter the Venturi effect controlling the rate of exit of the particulate material from the first hopper.

3. An apparatus as claimed in claim 1, wherein the apparatus further includes a preliminary hopper (20) in flow connection with the first hopper and a deflector means (19A,19B) is inserted into the a preliminary hopper to ensure that a relatively high proportion of medium to large size particulate material is passed to the first hopper.

4. An apparatus as claimed in claim 3 wherein a screening filter (24) is fitted to the upper outlet of the preliminary hopper to ensure that only fine dust is extracted from the system.

5. An apparatus as claimed in any one claims 1 to 4, wherein the apparatus further comprises:
a reservoir (117) of particulate welding material from the take-off means from which the material may be recycled at selected intervals into the first hopper.

6. An apparatus as claimed in any one claims 1 to 5, in combination with a welding apparatus (50 - 52) that includes a welding injection tube (50) connected to the second outlet means which welding injection tube is located at an optimum angle to the horizontal whereby:
(a) the particulate welding material drops behind the flash area caused by ignition of welding wire (51); and
(b) the particulate welding material does not drop so far from the flash area that a weld pool is not formed.

7. An improved method for the metered dispensation of a particulate welding material using the apparatus of any one of claims 1 and 6, which method comprises the steps of:
(a) establishing the primary flow of the material through the first hopper and the second hopper in series;
(b) extracting from the primary flow through the second hopper a determined secondary flow of the material by the take-off means; and
(c) recycling the secondary flow to the primary flow in such a manner that a metered dispensation of the material is obtained,
wherein the improvement comprises using the restrictor means to adjust the primary flow to obtain the proportionate flow through the first hopper in such a manner that a desired size range of particulate material is delivered.

8. A method as claimed in claim 7, wherein the adjustment of primary flow is achieved by inserting one or more collets (1A) in the first outlet to restrict to a predetermined extent the flow of particulate material from the first hopper.

9. A method as claimed in claim 7 or claim 8, wherein the particulate material is welding material comprising fine material and coarse material and the recycled flow of the particulate welding material is passed to a preliminary hopper (20) in flow connection with the first hopper in which the fine material in the preliminary hopper is passed upwardly to a collection chamber and the coarse material is passed downwardly to the first hopper.

10. A method as claimed in claim 9 which further comprises passing the determined secondary flow in part to a reservoir (117) for the particulate welding material from which reservoir the particulate welding material may be recycled at selected intervals into the first hopper.

## Patentansprüche

1. Vorrichtung zur dosierten Abgabe eines partikelförmigen Schweißmaterials, wobei die Vorrichtung umfasst:
(a) einen ersten Behälter (1), der eine erste Einlasseinrichtung und eine erste Auslasseinrichtung (2, 3) hat, die eine zentral-angeordnete offene Röhre (3) hat;
(b) einen zweiten Behälter (10) in Strömungsverbindung mit dem ersten Behälter, der eine zweite Einlasseinrichtung und eine zweite Auslasseinrichtung (14, 15) hat;
(c) eine Abnahmeeinrichtung (12, 13) in Kombination mit dem zweiten Behälter und die angepasst ist, einen Anteil des partikelförmigen Materials von einem Strom des Materials über den zweiten Behälter zu entfernen; und
(d) eine Recyclingeinrichtung (19), die eingerichtet ist, den entsprechenden Strom des partikelförmigen Materials zum ersten Behälter zurückzubringen,
**dadurch gekennzeichnet, dass**
eine Drosseleinrichtung (1A) in die erste Auslasseinrichtung (2, 3) eingefügt ist, um den Strom des partikelförmigen Materials zu beschränken, indem der Venturi-Effekt in dem Bereich der zentral-angeordneten offenen Röhre geändert wird.

2. Vorrichtung nach Anspruch 1, wobei der erste Behälter in einer konischen Entlade-Schütte (2, 3) endet und die Beschränkungseinrichtung eine oder mehrere einer Reihe an Konushülsen (1A) umfasst, welche in den Boden der konischen Entlade-Schütte (3) eingefügt ist/sind, um den Venturi-Effekt zu ändern, um die Auslassrate des partikelförmigen Materials vom ersten Behälter zu steuern.

3. Vorrichtung nach Anspruch 1, wobei die Vorrichtung außerdem einen Vor-Behälter (20) in Stömungsverbindung mit dem ersten Behälter aufweist, wobei eine Abtenkeinrichtung (19A, 19B) in den Vor-Behälter eingefügt ist, um sicherzustellen, dass eine relativ hoher Anteil des Mediums bis zu einer großen Partikelmaterialgröße zu dem ersten Behälter durchgelassen wird.

4. Vorrichtung nach Anspruch 3, wobei ein Sieb-Filter (24) am oberen Auslass des Vor-Behälters eingepasst ist, um sicherzustellen, dass lediglich feiner Staub von dem System extrahiert wird.

5. Vorrichtung nach einem der Anspräche 1 bis 4, wobei die Vorrichtung außerdem umfasst:
einen Partikel-Schweißmaterial-Tank (117) von der Abnahmeeinrichtung, von welchem das Material in ausgewählten Intervallen in den ersten Behälter recycelt werden kann.

6. Vorrichtung nach einem der Anspräche 1 bis 5 in Kombination mit einer Schweißvorrichtung (50-52), welche eine Schweißeinspritzröhre (50) aufweist, welche mit der zweiten Auslasseinrichtung verbunden ist, wobei die Schweißeinspritzröhre in einem optimalen Winkel zur Horizontalen angeordnet ist, wodurch:
(a) das partikelförmige Schweißmaterial hinter den Abbrennbereich fällt, verursacht durch Zündung des Schweißdrahts (51); und
(b) das partikelförmige Schweißmaterial nicht so weit von dem Abbrennbereich fällt, dass kein Schweißbecken gebildet wird.

7. Verbessertes Verfahren für die dosierte Verteilung eines partikelförmigen Schweißmaterials unter Verwendung der Vorrichtung nach einem der Ansprüche 1 bis 6, wobei das Verfahren folgende Schritte umfasst:
(a) Einrichten des Primärstroms des Materials durch den ersten Behälter und den zweiten Behälter der Reihe nach;
(b) Extrahieren - vom Primärstrom über den zweiten Behälter - eines bestimmten Sekundärstroms des Materials durch die Abnahmeeinrichtung; und
(c) Recyceln des Sekundärstroms zum Primärstrom in einer Weise, dass eine dosierte Abgabe des Materials erlangt wird,
wobei die Verbesserung die Verwendung der Beschränkungseinrichtung umfasst, um den Primärstrom einzustellen, um den entsprechenden Strom durch den ersten Behälter in einer Weise zu erlangen, dass eine gewünschte Bereichsgröße an partikelförmigem Material geliefert wird.

8. Verfahren nach Anspruch 7, wobei die Einstellung des Primärstroms durch Einfügen von einer oder mehreren Konushülsen (1A) in den ersten Auslass erreicht wird, um ein vorher festgelegtes Ausmaß des Stroms an partikelförmigem Material vom ersten Behälter zu beschränken.

9. Verfahren nach Anspruch 7 oder 8, wobei das partikelförmige Material Schweißmaterial ist, welches feines Material und grobes Material umfasst, und der recycelte Strom des partikelförmigen Schweißmaterials zum Vor-Behälter (20) in Strömungsverbindung mit dem ersten Behälter durchgelassen wird, in welchem das feine Material im Vor-Behälter nach oben zu einer Sammelkammer durchgelassen wird und das grobe Material nach unten zum ersten Behälter durchgelassen wird.

10. Verfahren nach Anspruch 9, welches außerdem das teilweise Durchlassen des vorbestimmten Sekundärstroms zu einem Tank (117) für das partikelförmige Schweißmaterial umfasst, wobei von dem Tank das partikelförmige Schweißmaterial in ausgewählten Intervallen in den ersten Behälter recycelt wird.

## Revendications

1. Appareil permettant un apport régulé de matériau particulaire de soudure, lequel appareil comporte :
a) une première trémie (1) dotée d'un premier moyen d'entrée et de premiers moyens de sortie (2, 3) comportant un tube ouvert (3) disposé en position centrale ;
b) une deuxième trémie (10), disposée en connexion d'écoulement avec la première trémie et dotée d'un deuxième moyen d'entrée et de deuxièmes moyens de sortie (14, 15) ;
c) des moyens d'extraction (12, 13), associés à la deuxième trémie et adaptés pour séparer du matériau qui s'écoule dans la deuxième trémie une certaine proportion du matériau particulaire ;
d) et des moyens de recyclage (19), adaptés pour renvoyer vers la première trémie ladite proportion de matériau particulaire ;
et est **caractérisé en ce qu'**il y a :
un moyen de resserrement (lA), inséré au niveau des premiers moyens de sortie (2, 3) et conçu pour resserrer l'écoulement du matériau particulaire en modifiant l'effet Venturi dans la région du tube ouvert disposé en position centrale.

2. Appareil conforme à la revendication 1, dans lequel la première trémie se termine en une glissière conique de décharge (2, 3) et le moyen de resserrement comprend une douille ou une série de plusieurs douilles (lA), insérée(s) dans la partie basse (3) de la glissière conique de décharge pour modifier l'effet Venturi qui permet de régler le débit auquel le matériau particulaire sort de la première trémie.

3. Appareil conforme à la revendication 1, lequel appareil comporte en outre une trémie préliminaire (20), disposée en connexion d'écoulement avec la première trémie, et des moyens déflecteurs (19A, 19B) insérés dans cette trémie préliminaire afin d'assurer que les particules de taille moyenne à large du matériau particulaire passent bien, en une proportion relativement élevée, dans la première trémie.

4. Appareil conforme à la revendication 3, dans lequel un tamis de criblage (24) est monté à l'extrémité supérieure de la trémie préliminaire, pour assurer que seules les poussières fines sont retirées du système.

5. Appareil conforme à l'une des revendications 1 à 4, lequel appareil comporte en outre un réservoir (117) de matériau particulaire de soudure retiré par les moyens d'extraction, à partir duquel ce matériau peut être recyclé dans la première trémie à intervalles choisis.

6. Appareil conforme à l'une des revendications 1 à 5, associé à un appareil de soudure (50 - 52) qui comporte un tube (50) d'injection de soudure, raccordé aux deuxièmes moyens de sortie, lequel tube d'injection de soudure est placé de manière à faire un angle optimal par rapport à l'horizontale, de manière à ce que :
a) le matériau particulaire de soudure tombe en arrière de la zone d'éclair provoquée par la combustion du fil de soudure (51),
b) mais le matériau particulaire de soudure ne tombe pas assez loin de la zone d'éclair pour qu'il ne se forme pas de bain de soudure.

7. Procédé amélioré d'apport régulé d'un matériau particulaire de soudure au moyen d'un appareil conforme à l'une des revendications 1 à 6, lequel procédé comporte les étapes suivantes :
a) établir un courant primaire du matériau dans la première trémie et la deuxième trémie, disposées en série ;
b) séparer de ce courant primaire passant dans la deuxième trémie, à l'aide des moyens d'extraction, un courant secondaire déterminé du matériau ;
c) et recycler ce courant secondaire dans le courant primaire, de manière à obtenir un apport régulé du matériau ;
et lequel procédé est amélioré en ce qu'on a recours à un moyen de resserrement pour ajuster le courant primaire afin d'obtenir un écoulement proportionné dans la première trémie, de manière à ce que soient apportées des particules du matériau particulaire de tailles situées dans la gamme voulue.

8. Procédé conforme à la revendication 7, dans lequel on réalise l'ajustement du courant primaire en insérant une ou plusieurs douilles (lA) dans la première sortie afin de resserrer, dans une mesure prédéterminée, l'écoulement du matériau particulaire sortant de la première trémie.

9. Procédé conforme à la revendication 7 ou 8, dans lequel le matériau particulaire est un matériau de soudure comprenant des particules fines et des particules grossières, et l'on fait passer le courant recyclé de matériau particulaire de soudure dans une trémie préliminaire (20) en connexion d'écoulement avec la première trémie, de laquelle trémie préliminaire on fait passer, par en-haut, les fines particules de matériau vers une chambre de collecte, tandis que par en-bas, les particules grossières de matériau passent dans la première trémie.

10. Procédé conforme à la revendication 9, qui comporte en outre le fait de faire passer une partie du courant secondaire déterminé dans un réservoir (117) de matériau particulaire de soudure, à partir duquel réservoir le matériau particulaire de soudure peut être recyclé dans la première trémie à intervalles choisis.
